# EUROPÄISCHE PATENTSCHRIFT

(11) **EP 0 838 609 B1**
(45) Veröffentlichungstag und Bekanntmachung des Hinweises auf die Patenterteilung: **26.11.2003**
(21) Anmeldenummer: 97115800.1
(22) Anmeldetag: 11.09.1997
(51) Int. Cl.: F16H 15/42

(54) **Stufenlos verstellbares Umschlingungsgetriebe**
Continuously variable conical pulley transmission
Variateur continu de vitesse à poulies coniques

(30) Priorität: 22.10.1996 DE 19643437; 27.11.1996 DE 19649142
(43) Veröffentlichungstag der Anmeldung: 29.04.1998
(73) Patentinhaber: Volkswagen Aktiengesellschaft, 38436 Wolfsburg (DE)
(72) Erfinder: Schneider, Arthur, Ing., 38112 Braunschweig (DE); Hofmann, Lars, Dipl.-Ing., 04600 Altenburg (DE)

(56) Entgegenhaltungen:
- EP-A- 0 305 110
- DE-A- 1 550 861
- DE-B- 1 180 599
- DE-B- 1 232 428
- FR-A- 1 353 802
- FR-A- 2 174 381
- US-A- 2 686 432
- US-A- 2 881 622
- US-A- 3 633 430
- PATENT ABSTRACTS OF JAPAN vol. 013, no. 204 (M-825), 15.Mai 1989 & JP 01 026049 A (TOYOTA MOTOR CORP), 27.Januar 1989,

## Beschreibung

Die Erfindung betrifft ein stufenlos verstellbares Umschlingungsgetriebe gemäß dem Oberbegriff des Patentanspruchs 1. Weiterhin betrifft die Erfindung eine Antriebsanordnung mit dem bevor genannten Umschlingungsgetriebe.

Ein Umschlingungsgetriebe ist beispielsweise aus der DE-OS 44 34 020 bekannt. Neben derartigen Kegelscheibenumschlingungsgetrieben sind aus dem Taschenbuch für den Maschinenbau, Dubbel, 14. Auflage, Seite 447, Bild 4 weitere Getriebetypen bekannt, mit denen das Getriebeübersetzungsverhältnis stufenlos veränderbar ist.

So ist aus der US-PS 3,633,430 ein gattungsgemäßes Umschlingungsgetriebe bekannt, welches zwei Kegelscheibenpaare aufweist, die entsprechend miteinander über ein Umschlingungsmittel wirksam verbunden werden können, um eine Abtriebswelle entsprechend anzutreiben. Bei der hier bekannten Vorrichtung ist noch nicht optimal, dass die Bauform dieser Vorrichtung sehr aufwendig ist, nämlich einen bestimmten Raumbedarf benötigt. Weiterhin müssen die einzelnen Bestandteile der Vorrichtung, insbesondere die einzelnen Kegelscheibenpaare bzw. Kegelscheiben genauestens gefertigt werden, damit deren Wirkungsweise auch optimal realisierbar ist. Die Praxis hat gezeigt, dass insbesondere bei auftretenden Fertigungstoleranzen das hier beschriebene Umschlingungsgetriebe noch nicht optimal ist.

Die Aufgabe der Erfindung besteht daher darin, das Umschlingungsgetriebe der eingangs genannten Art derart auszugestalten und weiterzubilden, dass eine kompakte Bauweise erzielt ist und der Einfluss von Fertigungstoleranzen der Bauelemente minimiert ist.

Gelöst wird diese Aufgabe für das Umschlingungsgetriebe gemäß den Merkmalen des Patentanspruches 1 sowie für die Antriebsanordnung mit dem entsprechenden Umschlingungsgetriebe durch die Merkmale des Patentanspruches 24.

Es ist nun eine kompakte Bauweise der Vorrichtung, nämlich des Umschlingungsgetriebes realisiert, wobei der Einfluss der in der Praxis auftretenden Fertigungstoleranzen aufgrund der entsprechenden Lagerung der Kegelscheiben erheblich minimiert ist. Im Ergebnis sind die eingangs beschriebenen Nachteile vermieden.

Durch die koaxiale Anordnung der beiden Kegelscheibenpaare läßt sich das eine entsprechende Außengeometrie aufweisende Umschlingungsmittel unmittelbar zwischen den beiden direkt übereinanderliegenden Kegelscheibenpaaren anordnen. Dabei können die Kegelscheibenpaare nach außen öffnende oder schließende Kegelflächen aufweisen.

Bei diesem Umschlingungsgetriebe befinden sich als weitere Besonderheit beide Kegelscheibensätze entweder nur auf der Getriebeeingangswelle oder nur auf der Getriebeausgangswelle, während die jeweils freie Welle mittels an den äußeren Kegelscheiben angebrachten Außenverzahnungen über Zahnräder oder flexible Umschlingungsmittel wie Keiloder Zahnriemen antreibbar ist.

Bei diesem koaxialen Aufbau der inneren und äußeren Kegelscheiben ist vorgesehen, daß eine der Kegelscheiben des äußeren Kegelscheibenpaares drehbar und axial unverschieblich auf der Antriebswelle und die andere äußere Kegelscheibe drehbar im Bereich eines im Durchmesser reduzierten Abschnitts der Antriebswelle angeordnet ist. Zusätzlich kann zum Ausgleich von Fertigungstolleranzen vorgesehen sein, daß letztere äußere Kegelscheibe auch axial verschieblich angeordnet ist. Außerdem ist vorgesehen sein, daß diese äußere Kegelscheibe auf einem axialen Fortsatz einer ebenfalls axial verschiebbar auf dem im Durchmesser reduzierten Antriebswellenabschnitt angeordneten inneren Kegelscheibe drehbar gelagert ist. Als besonders vorteilhaft ist dabei anzusehen, wenn die axial verschiebbare innere Kegelscheibe auf den im Durchmesser reduzierten Antriebswellenabschnitt gelagert ist und die äußeren Kegelscheiben auf der Antriebswelle bzw. dem koaxialen Kegelscheibenabschnitt wälzgelagert und axialgelagert sind.

Bezüglich der Axiallager kann vorgesehen sein, daß diese zwischen den Fortsätzen der äußeren Kegelscheiben und einem Wellenbund an der Antriebswelle bzw. dem Kegelscheibenfortsatz der axial verschieblichen inneren Kegelscheibe angeordnet sind.

Zur Erzeugung einer Anpreßkraft der äußeren Kegelscheiben gegen das Umschlingungsmittel kann vorzugsweise vorgesehen sein, daß das Axiallager der axial beweglichen äußeren Kegelscheibe gegen einen auf dem axialen Fortsatz der axial beweglichen inneren Kegelscheibe angeordneten Ring wirkt, der seinerseits auf seiner von dem Axiallager wegweisenden Seite mittels einer Rückstellanordnung gegen das Axiallager und damit gegen den axial verschieblichen äußeren Kegelscheibe wirkt. Diese Rückstellanordnung kann als ein zwischen dem Ring und einem stirnseitigen Wellenbund an dem Fortsatz der axial verschieblichen inneren Kegelscheibe angeordnetes Federelement oder eine druckmittelbetriebene Kolben-Zylinder-Anordnung sein.

Eine Verstellung der axial verschieblichen inneren Kegelscheibe erfolgt durch die Verstellung des Übertragungsmittels. Zur Erzeugung einer Anpreßkraft der Kegelscheiben gegen das Übertragungsmittel kann ein druckmittelbetriebenes Betätigungsorgan vorgesehen sein, dessen Anpreßkraft in Abhängigkeit von der Übersetzung und/oder dem Eingangsdrehmoment geregelt wird. Im einfachsten Fall genügt jedoch eine zwischen dem stirnseitigen Ende des Kegelscheibenfortsatzes und einem Wellenbund an der Antriebswelle angeordnete Feder als geeignetes Rückstellmittel.

Zur Leistungsübertragung von dem inneren zu dem äußeren Kegelscheibensatz ist ein Umschlingungsmittel vorgesehen, das vorzugsweise aus einem biegesteifen Ring besteht. In einer Ausführungsform kann das Umschlingungsmittel als ein beschichtetes Metall-Bauteil ausgeführt sein, bei dem ein metallischer Kern von einem Reibmaterial umschlossen ist. In anderen Varianten kann vorgesehen sein, daß auch oder ausschließlich die Kegelscheibenlaufflächen mit einem solchen Reibmaterial versehen sind.

Das Umschlingungsmittel weist eine Außenkontur auf, die geeignet ist, das von dem inneren Kegelscheibensatz mit seinen radial nach außen öffnenden Kegelscheiben angebotene Drehmoment aufzunehmen und an die sich radial nach außen verschließenden Kegelscheiben des äußeren Kegelscheibensatzes zu übertragen. Dazu ist vorzugsweise vorgesehen, daß die axialen Stirnseiten des Umschlingungsmittels im wesentlichen V-förmig ausgebildet sind. Außerdem kann vorgesehen sein, daß das Umschlingungsmittel an seinem radialen Außenumfang eine U-förmige, eine V-förmige, eine halbkreisförmige, eine elliptische Einsenkung oder eine einen Rechteckeinschnitt aufweisende Querschnittsgeometrie hat, die zur Aufnahme einer auf das Umschlingungsmittel eine Verstellkraft ausübende Verstelleinrichtung geeignet ist.

Schließlich ist denkbar das Umschlingungsmittel so auszubilden, daß es eine etwa Doppel-T-Querschnittsgeometrie aufweist. Der radial innere T-Schenkel ist dabei im Bereich der inneren und äußeren Kegelflächen der beiden Kegelscheibenpaare angeordnet und mit dem radial äußeren T-Schenkel über einem Ringabschnitt verbunden, der bis radial außerhalb der äußeren Kegelscheiben reicht. Auch hier kann der radial äußere T-Schenkel mit einer Aussparung zur Aufnahme von Andrückelementen versehen sein.

Bezüglich des Steigungswinkels der V-Schenkel der axialen Stirnflächen des Umschlingungsmittels ist vorzugsweise vorzusehen, daß diese dem Steigungswinkel der äußeren und inneren Kegelscheibenflächen radial zur Flächennormalen auf der Antriebswelle bzw. Abtriebswelle entsprechen.

Außerdem wird vorgeschlagen, daß das Umschlingungsmittel eine Querschnittsgeometrie mit einer Außenkontur mit wenigstens vier Radien r₁, bis r₄ aufweist, wobei die Radien r₁, r₂ jeweils größer sind als die Radien r₃, r₄. Auf diese Weise wird erreicht, daß zur Minimierung der Bohrreibung an den Reibflächen die Flächenpressung zwischen dem Umschlingungsmittel und den Kegelscheibenflächen auf in Bezug auf die Materialien der Reibpaarung gerade noch zulässig hohe Werte einstellbar ist. In einer bevorzugten Ausgestaltung der Erfindung ist vorgesehen, daß die Bereiche des Umschlingungsmittels mit den kleineren Außenkonturradien r₁, r₂ die Reibflächen für die inneren Kegelscheiben und die Bereiche mit den Außenkonturradien r₃ und r₄ die Reibflächen für die äußeren Kegelscheiben des Umschlingungsgetriebes bilden. Zusätzlich kann vorgesehen sein, daß die Außenkontur des Umschlingungsmittels weitere Außenkonturradien r₅, r₆ aufweist, die zwischen den Außenkonturradien r₁, r₃ und r₂, r₄ ausgebildet sind. Vorzugsweise sind die Außenkonturradien r₅, r₆ dabei größer als die Radien r₃ und r₄.

Zur Verstellung des Umschlingungsmittels und damit zur Änderung des Übersetzungsverhältnisses des stufenlosen Umschlingungsgetriebes wird eine Verstelleinrichtung vorgeschlagen, die wenigstens ein in eine Umschlingungsmittelausnehmung greifendes Andrückelement umfaßt. Diese Verstelleinrichtung ist am Getriebegehäuse gelagert und im wesentlichen radial zur Wellenlängsachse beweglich angeordnet ist.

Dabei kann die Verstelleinrichtung in einer Ausführungsform als Betätigungsstange einer Kolben-Zylinder-Anordnung ausgebildet sein, die an ihrem freien Ende wenigstens eine drehbar gelagerte Andrückrolle oder einen Gleitschuh trägt.

In einer anderen Ausführungsform kann vorgesehen sein, daß das Stellglied der Verstelleinrichtung als ein kreisbogenförmiger Blechbauteil ausgebildet ist, an dessen zum Umschlingungsmittel weisenden Seite wenigstens ein Andrückelement, vorzugsweise aber drehbar gelagerte Andrückrollen befestigt sind. Diese Rollen greifen dabei in die Ausnehmung des Umschlingungsmittels und üben so die notwendige Verstellkraft zur Einstellung des gewünschten Übersetzungsverhältnisses ein. Auch dieses kreisbogenförmige Stellglied ist mit einem Ende vorzugsweise am Getriebegehäuse drehbar gelagert, während an dem anderen freien Ende eine ebenfalls gehäusefeste Betätigungseinrichtung angekoppelt ist.

Schließlich kann vorgesehen sein, daß die Verstelleinrichtung als Stellhebel ausgebildet ist, der mit einem freien Ende am Getriebegehäuse drehbar gelagert ist und an seiner zu den Kegelscheiben weisenden Seite wenigstens eine Andrückrolle drehbar gelagert oder einen Gleitschuh trägt. Auf der anderen, von den Kegelscheiben wegweisenden Seite des Stellhebels ist dieser mit einer vorzugsweise druckmittelbetätigbaren Stelleinrichtung verbunden.

Zum besseren Verständnis der Erfindung ist der Beschreibung eine Zeichnung beigelegt. In ihr zeigt
- Figur 1: eine schematische Darstellung des Umschlingungsgetriebes mit einer Getriebeabtriebswelle,
- Figur 2: ein Querschnitt durch das Getriebe im Bereich des Umschlingungsmittels mit einer Übersetzungs-Verstelleinrichtung,
- Figur 3: das Umschlingungsgetriebe gemäß Figur 1 bei einem Übersetzungsverhältnis I=5,
- Figur 4: eine Darstellung gemäß Figur 2 bei einem Übersetzungsverhältnis I=5,
- Figur 5: die bogenförmige Verstelleinrichtung gemäß Figur 2, jedoch mit Betätigungsanordnung,
- Figur 6: das Umschlingungsgetriebe gemäß Figur 1 mit einer Kolbenstangen-Betätigungseinrichtung für das Umschlingungsmittel,
- Figur 7: ein Umschlingungsgetriebe gemäß Figur 1, jedoch mit einem Doppel-T-förmigen Umschlingungsmittel und einer außerhalb der Kegelscheiben angreifenden Betätigungseinrichtung,
- Figur 8: eine Stellhebel-Betätigungsvorrichtung für das Umschlingungsmittel des Getriebes gemäß Figur 1,
- Figur 9: ein Querschnitt durch das Umschlingungsmittel mit rechteckiger Ausnehmung für das Andrückmittel,
- Figur 10: eine Darstellung gemäß Figur 9, jedoch mit elliptischer Ausnehmung,
- Figur 11: eine Darstellung gemäß Figur 9, jedoch mit halbkreisförmiger Ausnehmung in Metallbauweise,
- Figur 12: eine Darstellung gemäß Figur 9, jedoch mit ebener Lauffläche und in Gummi-Metall-Bauweise,
- Figur 13: eine Darstellung gemäß Figur 9, jedoch mit V-förmiger Ausnehmung und
- Figur 14: ein Ringrad mit T-förmigem Querschnitt,
- Figur 15: eine Antriebsanordnung mit einem erfindungsgemäßen Getriebe,
- Figur 16: einen Querschnitt durch das biegesteife Umschlingungsmittel und
- Figur 17: einen Querschnitt gemäß Figur 16, jedoch in einer anderen Ausführungsform.

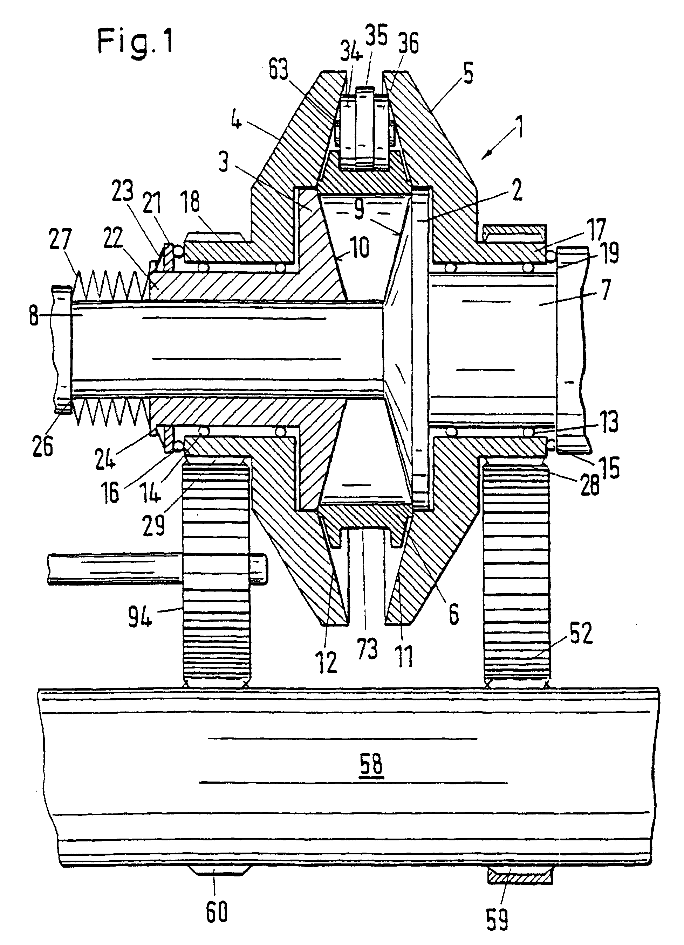

Wie der Übersichtsdarstellung eines Ausführungsbeispiels gemäß Figur 1 entnehmbar ist, umfaßt ein erfindungsgemäßes Umschlingungsgetriebe zwei zueinander koaxial angeordneten Kegelscheibensätze, die beide auf der Getriebeeingangswelle 7, 8 angeordnet sind. Der innere Kegelscheibensatz besteht aus einer fest mit der Eingangswelle 7, 8 verbundenen Kegelscheibe 2, sowie einer auf einem im Durchmesser reduzierten Abschnitt 8 der Getriebeeingangswelle drehfest aber axial verschieblich angeordneten Kegelscheibe 3. Die Kegelscheiben 2, 3 dieses inneren Kegelscheibensatzes verfügen über radial nach außen öffnende Kegelflächen 9, 10.

Der innere Kegelscheibensatz wird von einem äußeren Kegelscheibensatz mit den Kegelscheiben 4, 5 umfaßt, die radial nach außen den Zwischenraum zwischen den Kegelscheiben 4, 5 verjüngende Kegelflächen 11, 12 aufweisen.

Von den äußeren Kegelscheiben ist eine Kegelscheibe 5 auf der Getriebeeingangswelle 7 und die andere Kegelscheibe 4 auf einem axialen Fortsatz 22 der inneren Kegelscheibe 3 über Wälzlager 13, 14 und Axiallager 15, 16 gelagert. Während sich das Axiallager 15 in diesem Ausführungsbeispiel der Erfindung an einem Wellenbund 19 des Getriebeeingangswellenabschnitts 7 abstützt und somit eine axiale Beweglichkeit der äußeren Kegelscheibe 5 nicht zuläßt, ist die äußere Kegelscheibe 4 axial gegen einen auf dem Kegelscheibenfortsatz 22 angeordneten Ring 21 abgestützt, der seinerseits über ein Federelement 23 an einem Fortsatzbund 24 der axial beweglichen inneren Kegelscheibe 3 abgestützt ist. Die Anordnung dieses Federelementes 23 dient im wesentlichen dem Ausgleich von axialen Fertigungstolleranzen.

Zur Erzeugung einer Anpreßkraft auf die innere axial verschiebliche Kegelscheibe 3 ist ein Rückstellmittel 27 vorgesehen, das den im Durchmesser reduzierten Abschnitt 8 der Getriebeeingangswelle umfaßt und sich zwischen einem Wellenbund 26 der Getriebeeingangswelle und dem stirnseitigen Ende 24 des Fortsatzes 22 der Kegelscheibe 3 abstützt.

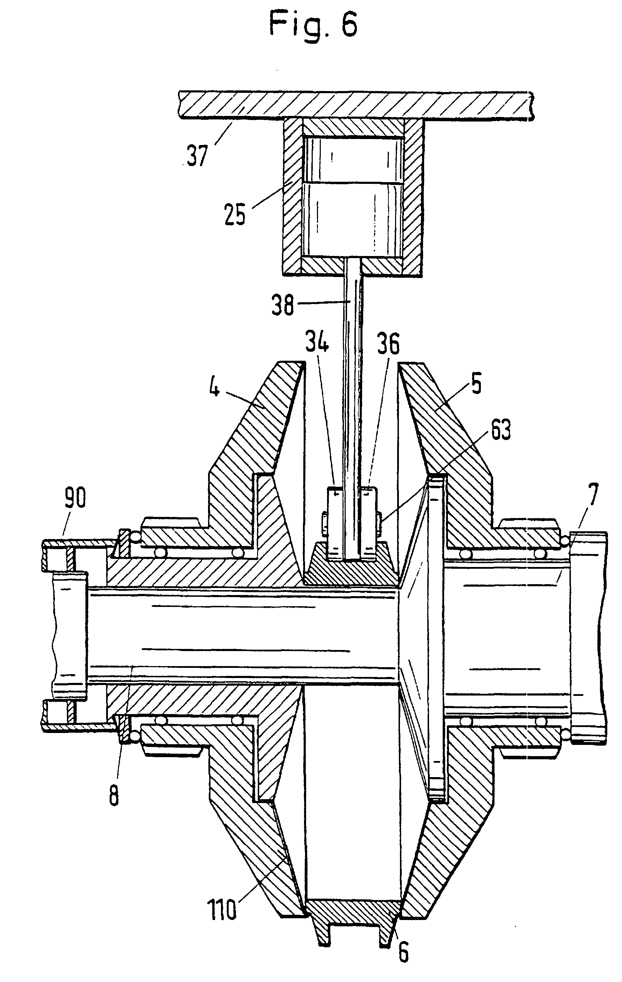

Anstelle der in Figur 1 dargestellten Federn 23, 27 können auch druckmittelbetätigbare Stelleinrichtungen 90 wie etwa Kolbenzylinderanordnungen zur Erzeugung der Anpreßkraft der Kegelscheiben an das Übertragungsmittel zur Anwendung gelangen (Figur 6).

Zwischen den zueinander koaxial angeordneten inneren und äußeren Kegelscheiben ist ein Umschlingungsmittel 6 angeordnet, das aus einem biegesteifen Ring besteht. Dieses Umschlingungsmittel 6 weist an seinen axialen Stirnseiten 32, 33 eine Querschnittsgeometrie auf, die im wesentlichen V-förmigen Charakter hat. Dabei stehen die V-Schenkel derart im Winkel zueinander, daß diese in allen Übersetzungsstufen des Getriebes an den Kegelflächen 9, 10; 11, 12 der inneren und äußeren Kegelscheiben 2, 3, 4, 5 zur Drehmomentenübertragung anliegen.

Das Umschlingungsmittel 6 ist in dem Ausführungsbeispiel gemäß Figur 1 so ausgebildet, daß an derem radialen Außenumfang eine Einsenkung 73 ausgebildet ist, in die wenigstens ein Andrückmittel 34 einer Verstelleinrichtung 35 eingreift. Mit Hilfe der durch die Verstelleinrichtung auf das Umschlingungsmittel ausübbaren Stellkraft läßt sich das Urnschlingungsmittel in unterschiedliche Übersetzungsstellungen zwischen den inneren und äußeren Kegelscheiben bringen.

Zur Übertragung der Antriebsleistung von den äußeren Kegelscheiben 4, 5 auf eine Getriebeabtriebswelle 58 sind auf axialen Fortsätzen 17, 18 der äußeren Kegelscheiben 4, 5 Außenverzahnungen 28, 29 ausgebildet. Mit dieser Außenverzahnung können entweder Zahnriemen oder Ketten 52 angetrieben werden, die mit der Außenverzahnung 59, 60 auf der Getriebeabtriebswelle 58 im Zahneingriff steht. Alternativ dazu können Zwischenzahnräder 94 vorgesehen sein, die mit der Außenverzahnung 28, 29 der äußeren Kegelscheibe 4 und mit der Außenverzahnung 59, 60 auf der Getriebeabtriebswelle 58 kämmen.

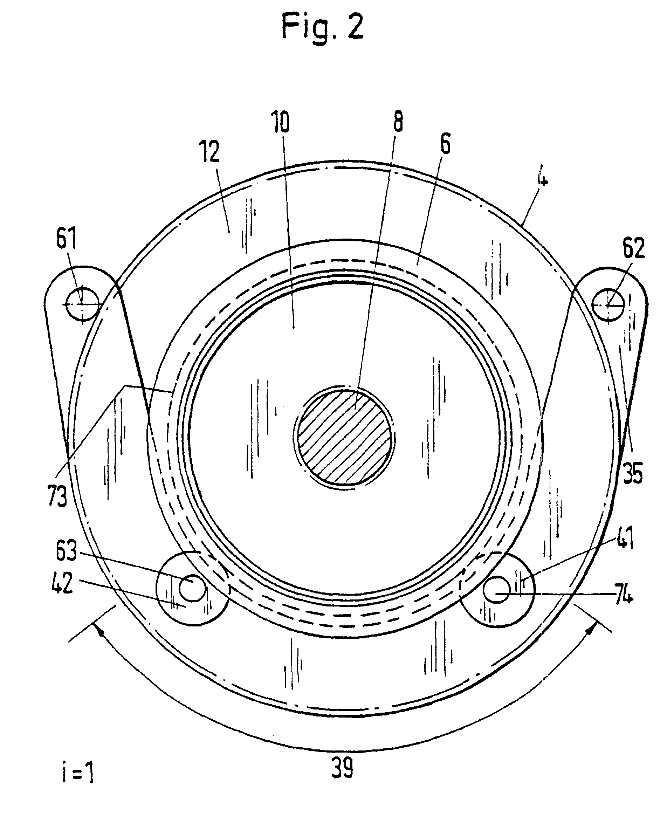

Das Getriebe gemäß Figur 1 ist in einer Situation dargestellt, in der das Umschlingungsmittel 6 unbelastet ist, so daß das Getriebe im Übersetzungsverhältnis I=1 arbe tet. Figur 2 zeigt einen Querschnitt durch das Getriebe gemäß Figur 1 im Bereich der Verstelleinrichtung 35 mit Blick auf die Kegelflächen 10, 12 der Kegelscheiben 3, 4. Auch hier befindet sich das Getriebe in einer Stellung, die einem Übersetzungsverhältnis I=1 entspricht.

In diesem Ausführungsbeispiel besteht die Verstelleinrichtung für das Umschlingungsgetriebe aus einem Stellglied 35 mit einem kreisbogenförmigen Abschnitt 39, in dem hier zwei auf Drehachsen 63, 74 drehbar gelagerte Andrückmittel für das Umschlingungsmittel angeordnet sind, die hier als Andrückrollen 41, 42 ausgebildet sind. Diese Andrückrollen greifen in die Einsenkung 73 des Umschlingungsmittels 6 und können so seitlich geführt die zur Verstellung des Übersetzungsverhältnisses notwendige Stellkraft auf das Urnschlingungsmittel 6 ausüben. Das Stellglied 35, das beispielsweise als Blechbauteil aufgebaut ist, ist mit dem Anlenkpunkt 61 getriebegehäusefest aber schwenkbar gelagert. Der zweite Anlenkpunkt 62 ist mit einer hier nicht dargestellten Betätigungseinrichtung verbindbar.

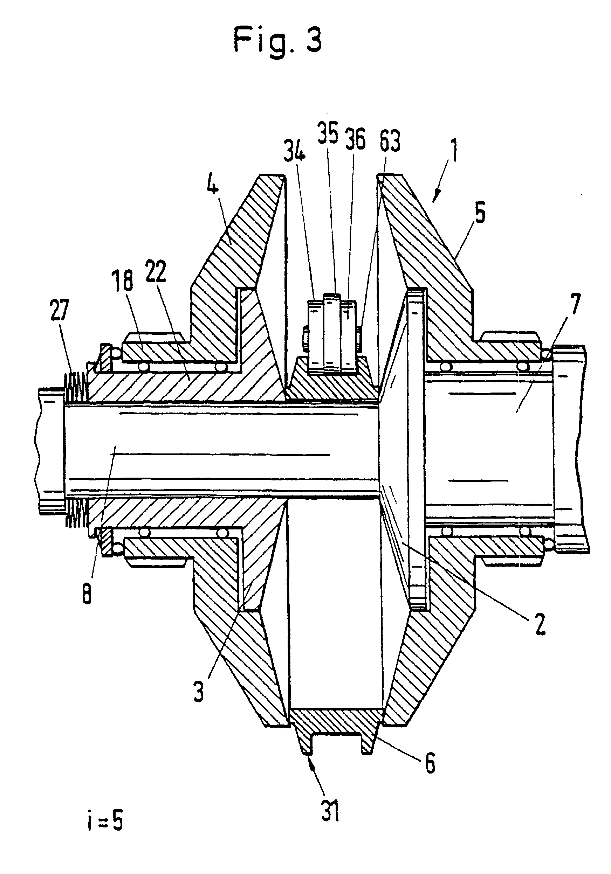

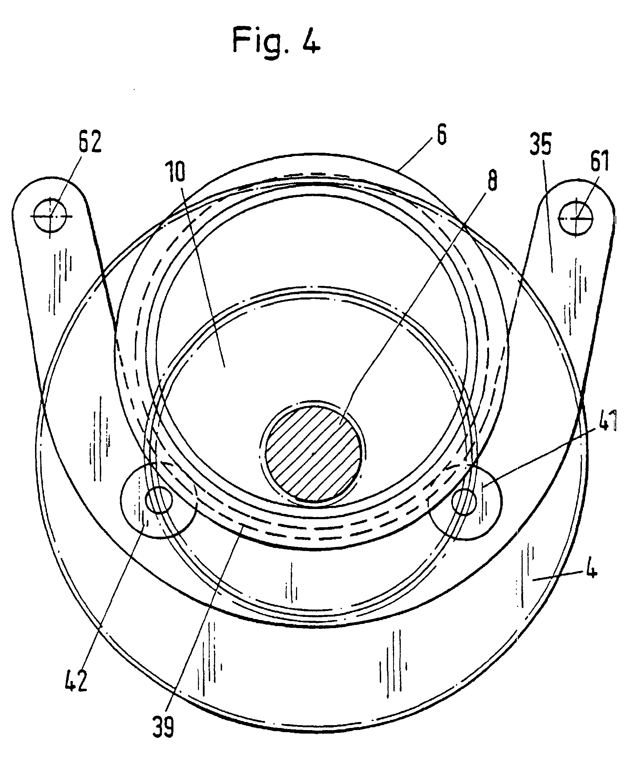

Figur 3 zeigt das Umschlingungsgetriebe 1 in der Position der größten Getriebeübersetzung, die bei den hier gewählten Abmessungen I=5 beträgt. Dabei befindet sich das Umschlingungsmittel 6 im Bereich der Antriebsachse 8 sowie in der äußeren Peripherie der äußeren Kegelscheiben 4, 5. Dieses Übersetzungsverhältnis ist ebenfalls in der Querschnittsdarstellung gemäß Figur 4 abgebildet.

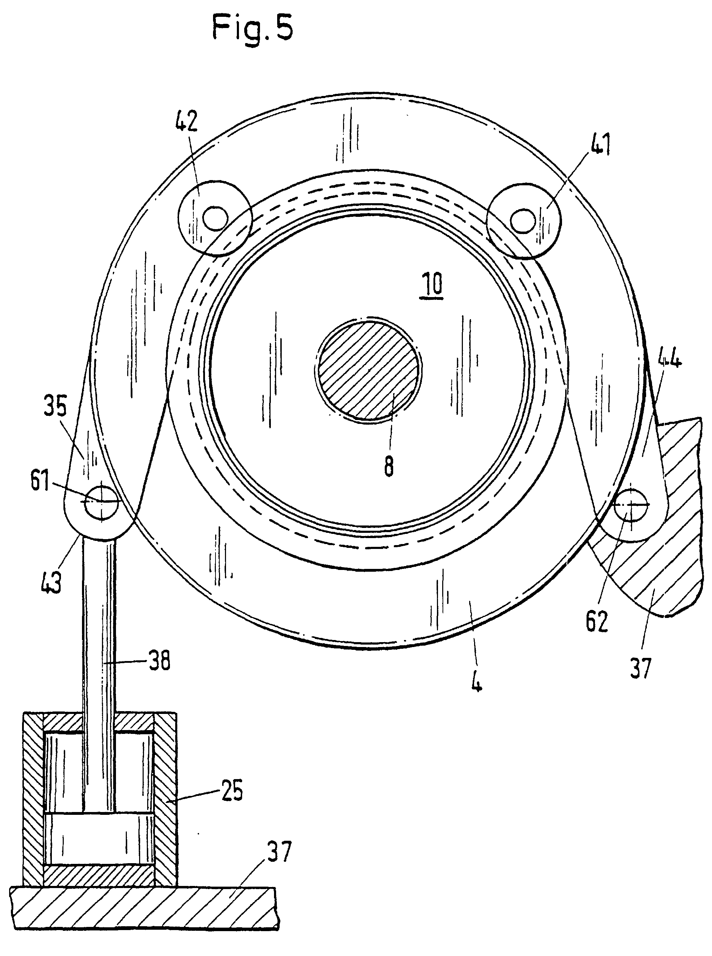

Figur 5 ist entnehmbar, wie die Anlenkpunkte 61 und 62 an den beiden freien Enden 43, 44 des Stellgliedes 35 an dem Getriebegehäuse 37 und an einer Kolbenstange 38 einer getriebegehäusefesten druckmittelbetätigbaren Kolben-Zylinder-Anordnung 25 befestigbar ist. Anstelle der hier abgebildeten Kolben-Zylinder-Anordnung können auch elektrisch angetriebene Schrittmotorsysteme zur Anwendung gelangen.

Einer andere Verstellvorrichtung zur Einstellung des Übersetzungsverhältnisses des Getriebes ist in Figur 6 dargestellt. Auch hier wirkt eine am Getriebegehäuse 37 befestigte Kolben-Zylinder-Anordnung 25 auf das Übertragungsmittel 6. Im Unterschied zur Ausführungsform gemäß Figur 5 ist hier jedoch kein bogenförmiges Stellglied sondern ein im wesentlichen stabförmiger Stellhebel 45 vorgesehen, der als verlängerte Kolbenstange an seinen von dem Zylinder der Kolben-Zylinder-Anordnung 25 wegweisenden Ende an einer Drehachse 83 zwei in die Ausnehmung 73 des Umschlingungselementes 6 eingreifende Laufrollen 34 trägt.

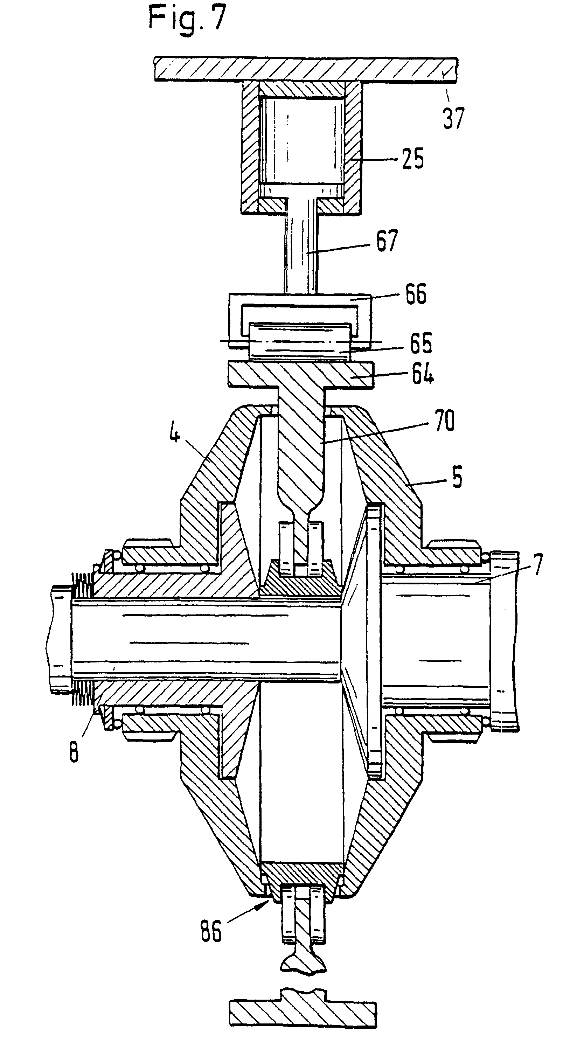

In einer weiteren Ausführungsform der Erfindung kann das Umschlingungselement 6 über ein weiteres Ringrad 64 betätigt werden, daß das hier einem T-Querschnitt aufweist unddurch wenigstens eine Öffnung 105 durch die drehfest miteinander verbundenen äußeren Kegelscheiben 4, 5 hindurchgeführt ist. Dabei ist der näher zur Antriebswelle 7, 8 weisende Schenkel in bereits beschriebener Weise mit Rollen versehen, die auf das Übertragungsmittel 86 wirken. Auf dem Außenumfang des Ringrades 64 können ein oder mehrere Andrückelemente 65 zur Verstellung des Übersetztungsverhältnisses des Getriebes eine Anpreßkraft ausüben. In Figur 7 ist ein derartiger Aufbau dargestellt. Die Andrückrolle 65 ist dabei über die Lagervorrichtung 66 mit der Kolbenstange 67 der Kolbenzylinderanordnung 25 verbunden, die ihrerseits am Getriebegehäuse 37 befestigt ist.

Als ein Vorteil dieser Ausführungsform des Umschlingungsmittels 86 kann angesehen werden, daß die Verstellvorrichtung 65-67 für das Übertragungsmittel 86 nicht in den Bereich zwischen die äußeren Kegelscheiben 4, 5 einzudringen braucht.

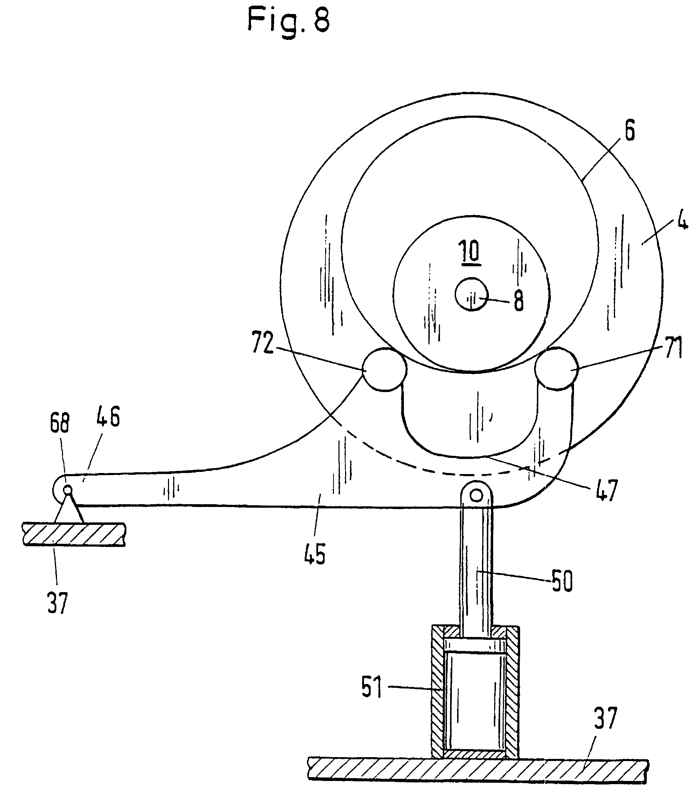

Eine letzte Variante der Stellvorrichtungen für das erfindungsgemäße Urnschlingungsgetriebe ist in Figur 8 dargestellt. Bei dieser Ausführungsform der Erfindung handelt es sich um einen Stellhebel 45, der mit einem Ende 46 über einen Drehpunkt 68 am Getriebegehäuse 37 schwenkbar gelagert ist. Auf der zur Eingangswelle 8 weisenden Seite des Schwenkhebels 45 sind in diesem Ausführungsbeispiel zwei Andrückrollen 71, 72 drehbar gelagert befestigt, die zur Verstellung des Übersetzungsverhältnisses des Getriebes auf das Umschlingungsmittel 6 eine Stellkraft ausüben können. Diese Stellkraft wird mittels einer Kolben-Zylinder-Anordnung 51 aufgebracht, deren Kolbenstange 50 mit dem Schwenkhebel 45 drehgelenkig verbunden ist.

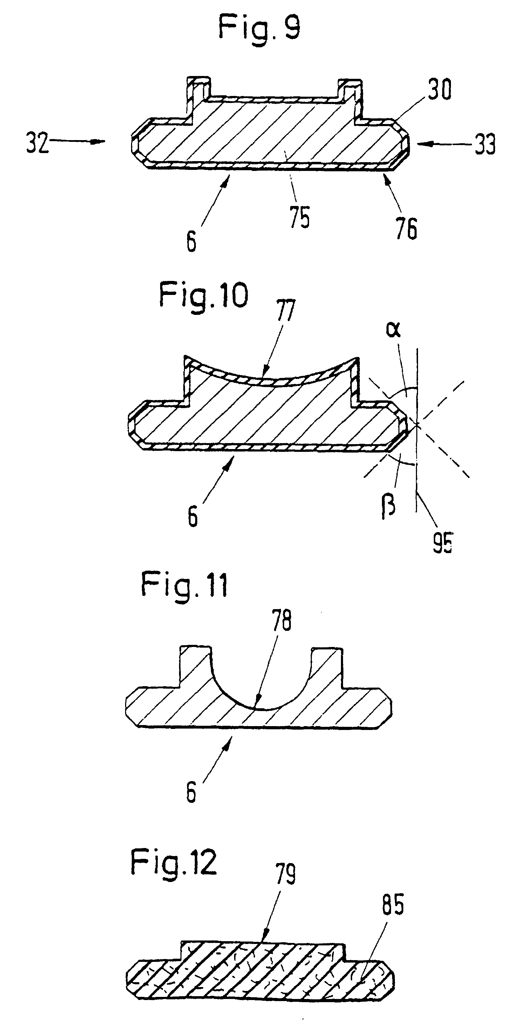

Die Figuren 9 bis 14 zeigen unterschiedliche Ausführungsformen des Umschlingungsmittels 6, 86 in Querschnittsdarstellung. Beginnend mit Figur 9 kann in dem Umschlingungsgetriebe ein Übertragungsmittel genutzt werden, dessen Außenkontur im Bereich der mit den Kegelflächen 9, 10, 11, 12 der Kegelscheiben 2, 3, 4, 5 in Kontakt stehenden axialen Stirnseiten in etwa V-förmig mit gebrochener V-Spitze ausgebildet seien. Dabei bilden die V-Schenkel zur Vertikalen 95 (oder zur Antriebswellen-Flächennormalen) die Winkel α und β, die den Kegelflächenwinkeln der inneren bzw. äußeren Kegelscheiben zu dieser Flächennormalen 95 entsprechen (Figur 10).

Zur Aufnahme der Andrückelemente, z. B. der Rollen 71, 72 oder von Gleitschuhen, ist auf der radial nach außen weisenden Seite des Umschlingungsmittels 6 eine hier rechteckig ausgebildete Ausnehmung 73 vorgesehen. Zusätzlich ist dieser Figur 9 entnehmbar, daß das Umschlingungsmittel einen metallischen Kern 75 sowie eine Außenhaut 30 aus beispielsweise einem gummielastischen Material besitzt.

Den gleichen Aufbau zeigt auch das Umschlingungsmittel gemäß Figur 10 auf. Hier ist allerdings eine etwa einen Ellipsenabschnitt aufweisende Ausnehmung 77 vorgesehen. Das Umschlingungsmittel gemäß Figur 11 zeigt dagegen eine halbkreisförmige Ausnehmung 78 und ist vollständig aus Metall hergestellt, während das Übertragungsmittel gemäß Figur 12 eine plane Lauffläche 79 für das oder die Andrückelemente der Verstellvorrichtung vorsieht. Außerdem ist dieses Umschlingungsmittel 6 vollständig aus einem elastischen Werkstoff 85 hergestellt, der vorzugsweise faserverstärkt, z. B. mit Aramidfasern oder Kohlenstofffasern, aufgebaut ist.

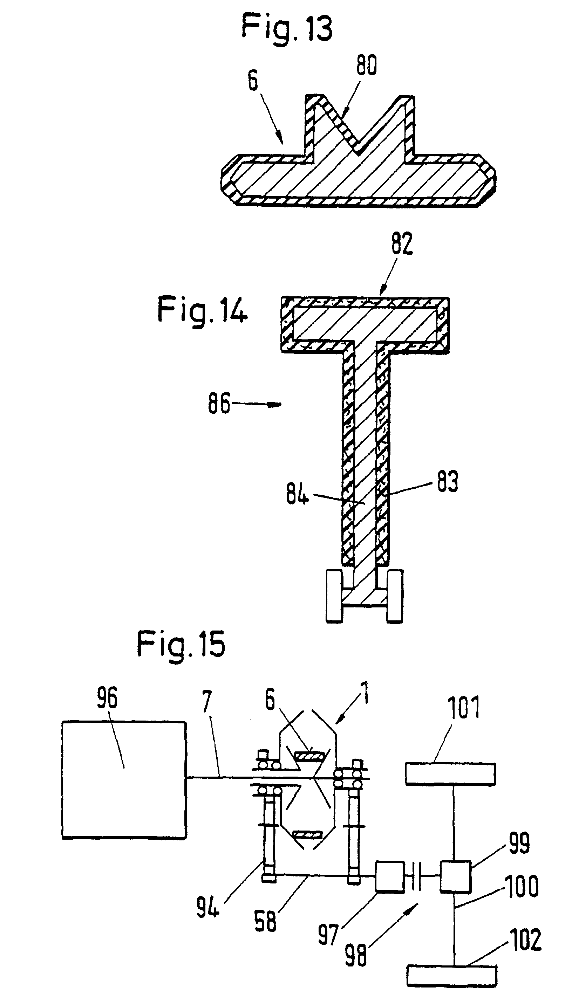

Figur 13 zeigt dagegen ein Umschlingungsmittel in der bereits erwähnten Gummi-Metall-Bauweise, bei der die Ausnehmung 80 eine etwa V-förmige Geometrie aufweist. Schließlich ist Figur 14 das schon in Figur 7 dargestellte Ringrad 86 entnehmbar. Dieses weist eine T-Querschnittsfläche auf, wobei der zu dem Andrückelement weisende T-Schenkel 82 eine plane Lauffläche hat. Zudem ist auch dieses Ringrad hier als Kompositbauteil aufgebaut, bei der ein Metallkern 84 von einer Schicht aus faserverstärktem gummiartigem Material 83 umgeben ist.

In Figur 15 ist eine Antriebsanordnung für ein Kraftfahrzeug dargestellt, bei der mit 96 ein Antriebsmotor bezeichnet ist, der über eine Welle 7 mit dem inneren Kegelscheibensatz des erfindungsgemäßen Getriebes 1 verbunden ist. Das äußere Kegelscheibenpaar treibt dabei wie schon beschrieben mittels einer Eingriffsverzahnung und Zahnrädern 94 eine Abtriebswelle 58 an, die über ein Wendegetriebe 97 und eine Anfahrkupplung 89 mit einem Differentialgetriebe 99 verbunden ist. Von diesem Getriebe 99 gehen in bekannter Weise Achsantriebswellen 100 ab, die mit Fahrzeugrädern 101, 102 in Antriebsverbindung stehen.

In einer anderen hier nicht dargestellten Variante der Antriebsanordnung kann auch vorgesehen sein, daß das Antriebsmoment am äußeren Kegelscheibenpaar in das Getriebe eingeleitet und über das innere Kegelscheibenpaar abgeleitet wird.

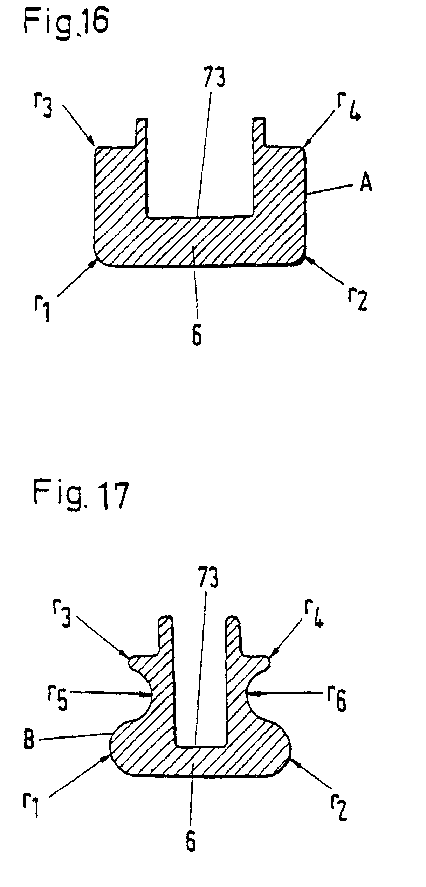

Schließlich zeigen die Figuren 16 und 17 weitere unterschiedliche Ausführungsformen des Umschlingungsmittels 6 in Querschnittsdarstellung. Erfindungsgemäß ist vorgesehen, daß die Außenkontur A wenigsten vier Radien r₁, r₂ und r₃, r₄ aufweist, wobei die ersteren Radien r₁ und r₂ jeweils größer sind als die Radien r₃ und r₄. In den Ausführungsbeispielen gemäß Figur 16 und Figur 17 ist jeweils vorgesehen, daß die Bereiche des Umschlingungsmittels 6 mit den Außenkonturradien r₁, r₂ die Reibflächen für die inneren Kegelscheiben 2, 3 und die Bereiche mit den Außenkonturradien r₃, r₄ die Reibflächen für die äußeren Kegelscheiben 4, 5 des Umschlingungsgetriebes 1 bilden. Auch in Figur 16 und Figur 17 zeigt die Querschnittsgeometrie des Umschlingungsmittels 6 eine im wesentlichen U-förmige Struktur, wobei auch hier jeweils an der radial nach außen weisenden Seite des Umschlingungsmittels einer Einsenkung 73 zur Aufnahme der beschriebenen Andrückmittel 34, 36 vorgesehen ist.

Wie Figur 17 außerdem entnehmbar ist, kann die Außenkontur B des Umschlingungsmittels 6 auch noch zusätzliche Radien r₅ und r₆ aufweisen, die zwischen den Außenkonturradien r₁, r₃ und r₂, r₄ ausgebildet sind. Für den Fall, daß diese Außenkonturradien r₅, r₆ größer sind als die Radien r₃ und r₄ ergibt sich eine Material- und damit gewichtssparende Einschnürung des Umschlingungsmittels 6.

## Patentansprüche

1. Stufenlos verstellbares Umschlingungsgetriebe mit zwei Kegelscheibenpaaren und mit einem zwischen den Kegelscheibepaaren angeordneten Umschlingungsmittel, wobei das erste Kegelscheibenpaar (2, 3) von einer Antriebswelle (7, 8) angetrieben wird und das zweite Kegelscheibenpaar (4, 5) eine Abtriebswelle (58) antreibt, wobei die Kegelscheibenpaare (2, 3; 4, 5) koaxial zueinander auf der Antriebswelle (7, 8) oder auf der Abtriebswelle (58) angeordnet sind, wobei das erste Kegelscheibenpaar (2, 3) - relativ zum zweiten Kegelscheibenpaar (4, 5) betrachtet - innen liegend und das zweite Kegelscheibenpaar (4, 5) - relativ zum ersten Kegelscheibenpaar (2, 3) betrachtet - außen liegend angeordnet ist, wobei das zweite Kegelscheibenpaar (4, 5) radial das erste Kegelscheibenpaar (2, 3) umschließt, **dadurch gekennzeichnet, dass** eine der Kegelscheiben (5) des zweiten Kegelscheibenpaares (4, 5) drehbar und axial unverschiebbar auf der die Kegelscheibenpaare tragenden Welle (7, 58) und die andere Kegelscheibe (4) drehbar und axial verschiebbar im Bereich eines im Durchmesser reduzierten Abschnittes (8) der Welle (7, 58) angeordnet ist, und dass die andere drehbare Kegelscheibe (4) des zweiten Kegelscheibenpaares (4, 5) auf einem axialen Fortsatz (22) einer axial verschiebbar auf dem Wellenabschnitt (8) sitzenden Kegelscheibe (3) des ersten Kegelscheibenpaares (2, 3) drehbar gelagert ist.

2. Getriebe nach Anspruch 1, **dadurch gekennzeichnet, dass** das innenliegende Kegelscheibenpaar (2, 3) radial nach außen öffnende Kegelflächen (9, 10) aufweist, und dass das außen liegende Kegelscheibenpaar (4, 5) über radial nach innen öffnende Kegelflächen (11, 12) verfügt.

3. Getriebe nach einem der Ansprüche 1 oder 2, **dadurch gekennzeichnet, dass** die innere Kegelscheibe (3) auf dem im Durchmesser reduzierten Abschnitt (8) der Welle (7) gleitgelagert ist, und das die äußeren Kegelscheiben (4, 5) über Wälzlager (13, 14) und Axiallager (15, 16) auf der Welle (7) bzw. auf der inneren Kegelscheibe (4) gelagert sind.

4. Getriebe nach Anspruch 3, **dadurch gekennzeichnet, dass** die Axiallager (15, 16) zwischen Stirnseiten von Fortsätzen (17, 18) an den äußeren Kegelscheiben (4, 5) und Wellenbünden (19, 20) an der Welle (7) und an dem Kegelscheibenfortsatz (22) angeordnet sind.

5. Getriebe nach Anspruch 4, **dadurch gekennzeichnet, dass** sich das Axiallager (16) an einem Ring (21) abstützt, der auf dem Fortsatz (22) der inneren Kegelscheibe (3) axial durch ein Rückstellelement (23), z. B. eine Feder oder eine Kolben-Zylinder-Anordnung, belastbar angeordnet ist.

6. Getriebe nach einem oder mehreren der Ansprüche 1 bis 5, **dadurch gekennzeichnet, dass** zwischen dem axialen stimseitigen Ende (24) des Kegelscheibenfortsatzes (22) des ersten Kegelscheibenpaares (2, 3) und einem Wellenbund (26) des Wellenabschnitts (8) ein Rückstellmittel (27) zur Erzeugung einer Anpresskraft an das Umschlingungsmittel (6, 86) angeordnet ist.

7. Getriebe nach Anspruch 6, **dadurch gekennzeichnet, dass** das Andrückmittel (27) eine die Anpresskraft in Abhängigkeit von der Getriebeübersetzung und/oder dem Eingangsdrehmoment erzeugende druckmittelbetätigbare Kolben-Zylinder-Anordnung (90) oder eine Feder (27) ist.

8. Getriebe nach einem oder mehreren der Ansprüche 1 bis 7, **dadurch gekennzeichnet, dass** die Fortsätze (17, 18) der äußeren Kegelscheiben (4, 5) an ihrem Außenumfang eine Außenverzahnung (28, 29) aufweisen.

9. Getriebe nach einem oder mehreren der Ansprüche 1 bis 8, **dadurch gekennzeichnet, dass** das Umschlingungsmittel (6, 86) aus einem biegesteifen Ring besteht.

10. Getriebe nach Anspruch 9, **dadurch gekennzeichnet, dass** die Kegelscheiben (2, 3, 4, 5) und/oder das Umschlingungsmittel (6, 86) eine Beschichtung (30, 83, 110) aus einem Reibmaterial aufweist, das vzw. aramid- oder kohlenstofffaserverstärkt ist.

11. Getriebe nach Anspruch 9 der 10, **dadurch gekennzeichnet, dass** das Umschlingungsmittel (6, 86) an seinem radialen Außenumfang (31) eine Ausnehmung (73) mit U-förmiger, V-förmiger, halbkreisförmiger, elliptischer oder rechteck-förmiger Querschnittsgeometrie aufweist, die zur Aufnahme einer eine Stellkraft auf das Umschlingungsmittel (6, 86) ausübenden Vertelleinrichtung geeignet ist.

12. Getriebe nach einem oder mehreren der Ansprüche 9 bis 11, **dadurch gekennzeichnet, dass** die rechts- und linksseitigen Stirnseiten (32, 33) des Umschlingungsmittels (6, 86) eine etwa V-förmige Querschnittsgeometrie mit gebrochener Spitze aufweist.

13. Getriebe nach Anspruch 12, **dadurch gekennzeichnet, dass** die V-Schenkel zur radial nach außen weisenden Flächennormalen (95) auf der Welle (8) die Winkel α, β einschließen, die dem Anstellwinkel der Kegelscheibenflächen (9, 10, 11, 12) zu dieser Flächennormalen (95) entsprechen.

14. Getriebe nach einem oder mehreren der Ansprüche 9 bis 13, **dadurch gekennzeichnet, dass** das Übertragungsmittel (6) eine Querschnittsgeometrie mit einer Außenkontur (A, B) mit wenigstens vier Radien (r₁, r₂ und r₃, r₄) aufweist.

15. Getriebe nach einem oder mehreren der Ansprüche 9 bis 14, **dadurch gekennzeichnet, dass** die Bereiche des Übertragungsmittels (6) mit den Außenkonturradien (r₁, r₂) die Reibflächen für die inneren Kegelscheiben (2, 3) und die Bereiche mit den Außenkonturradien (r₃, r₄) die Reibflächen für die äußeren Kegelscheiben (4, 5) des Umschlingungsgetriebes (1) bilden, wobei die Radien (r₁, r₂) als Reibflächen für die inneren Kegelscheiben (2, 3) jeweils größer sind als die jeweiligen Radien (r₃, r₄) als Reibflächen für die äußeren Kegelscheiben (4, 5).

16. Getriebe nach einem oder mehreren der Ansprüche 9 bis 15, **dadurch gekennzeichnet, dass** die Außenkontur des Übertragungsmittels (6) im wesentlichen U-förmig ist.

17. Getriebe nach einem oder mehreren der Ansprüche 9 bis 16, **dadurch gekennzeichnet, dass** die Außenkontur des Übertragungsmittels (6) weitere Außenkonturradien (r₅, r₆) aufweist, die jeweils zwischen den auf einer Seite liegenden jeweiligen Außenkonturradien (r₁, r₃ und r₂, r₄) als Reibflächen für die inneren bzw. äußeren Kegelscheiben (2, 3, 4, 5) ausgebildet sind.

18. Getriebe nach Anspruch 17, **dadurch gekennzeichnet, dass** die weiteren Außenkonturradien (r₅, r₆) jeweils größer sind als die jeweiligen Außenkonturradien (r₃, r₄), die die Reibflächen für die äußeren Kegelscheiben (4, 5) bilden.

19. Getriebe nach einem oder mehreren der Ansprüche 1 bis 18 mit einer Verstelleinrichtung für das Umschlingungsmittel, **gekennzeichnet durch** ein wenigstens ein auf dem Umschlingungsmittel (6, 86) aufliegendes Andrückelement (34, 36, 65) tragendes Stellglied (35), das getriebegehäusefest gelagert und radial zur Wellenlängsachse beweglich angeordnet ist.

20. Getriebe nach Anspruch 19, **dadurch gekennzeichnet, dass** das Stellglied als Betätigungsstange (38) ausgebildet ist, die an einem Ende wenigstens eine drehbar gelagerte Andrückrolle (34, 36) trägt und an ihrem anderen Ende mit einer getriebegehäusefesten Kolben-Zylinder-Anordnung (25) verbunden ist.

21. Getriebe nach Anspruch 19, **dadurch gekennzeichnet, dass** das Stellglied als ein einen kreisbogenförmigen Abschnitt (39) aufweisendes Tragbauteil für wenigstens eine drehbar gelagerte Andrückrolle (41, 42) ausgebildet ist, an dessen einem freien Ende (43) eine Betätigungseinrichtung (25) angreift, während das andere Ende (44) gehäusefest aber drehbar gelagert ist.

22. Getriebe nach Anspruch 12, **dadurch gekennzeichnet, dass** das Stellglied als Stellhebel (45) ausgebildet ist, der mit einem Ende (46) gehäusefest aber drehbar gelagert ist, an seiner zu den Kegelscheiben (2, 3; 4, 5) weisenden Seite (47) wenigstens ein Andrückelement (71, 72) trägt, und an seiner von den Kegelscheiben wegweisenden Seite von einer Betätigungseinrichtung (51) verstellbar gehalten wird.

23. Getriebe nach Anspruch 19 bis 22, **dadurch gekennzeichnet, dass** die Andrückelemente als Gleitschuhe ausgebildet sind.

24. Antriebsanordnung für ein Fahrzeug, mit einem Antriebsmotor (96) und einem Umschlingungsgetriebe (1) nach wenigstens einem der Ansprüche 1 bis 23, **dadurch gekennzeichnet, dass** die Außenverzahnung (28, 29) der Fortsätze (17, 18) der äußeren Kegelscheiben (4, 5) des Umschlingungsgetriebes (1) jeweils eine rechtsund linksseitige Kette (52) antreiben, die mit Antriebsverzahnungen (59, 60) auf einer Getriebewelle (58) in Eingriff stehen.

25. Antriebsanordnung nach Anspruch 24, **dadurch gekennzeichnet, dass** die Außenverzahnung (28, 29) wenigstens einer der äußeren Kegelscheiben (4, 5) über wenigstens ein Zahnrad (94) mit der Außenverzahnung (59, 60) der Getriebewelle (58) in Zahneingriff steht.

26. Antriebsanordnung nach einem der Ansprüche 24 oder 25, **dadurch gekennzeichnet, dass** das Antriebsmoment über die äußeren Kegelscheiben (4, 5) in das Getriebe eingeleitet und über die inneren Kegelscheiben (2, 3) aus dem Getriebe abgeleitet wird.

## Claims

1. Continuously adjustable wrap-round gearbox having two pairs of cone pulleys and having a transmission means disposed between the cone pulley pairs, the first pair of cone pulleys (2, 3) being driven by a drive shaft (7, 8) and the second pair of cone pulleys (4, 5) driving an output shaft (58), the cone pulley pairs (2 , 3 ; 4 , 5) being disposed coaxially one to the other on the drive shaft (7, 8) or on the output shaft (58), the first pair of cone pulleys (2 , 3) being arranged lying on the inside, considered in relation to the second pair of cone pulleys (4, 5) , and the second pair of cone pulleys (4, 5) being arranged lying on the outside, considered in relation to the first pair of cone pulleys (2, 3), the second pair of cone pulleys (4, 5) surrounding the first pair of cone pulleys (2, 3) radially, **characterized in that** one of the cone pulleys (5) of the second pair of cone pulleys (4, 5) is arranged in a rotatable and axially nondisplaceable fashion on the shaft (7, 58) which bears the pairs of cone pulleys, and the other cone pulley (4) is arranged in a rotatable and axially displaceable fashion in the region of a section (8) of the shaf t (7, 58) which is reduced in diameter, and **in that** the other rotatable cone pulley (4) of the second pair of cone pulleys (4, 5) is mounted rotatably on an axial continuation (22) of a cone pulley (3), seated in an axially displaceable fashion on the shaft section (8), of the first pair (2, 3) of cone pulleys.

2. Gearbox according to Claim 1, **characterized in that** the inner cone pulley pair (2, 3) has conical surfaces (9, 10) which open radially outwards and **in that** the outer cone pulley pair (4, 5) has conical surfaces (11, 12) which open radially inwards.

3. Gearbox according to either of Claims 1 and 2, **characterized in that** the inner cone pulley (3) is slide-mounted on the reduced-diameter section (8) of the shaf t (7) and **in that** the outer cone pulleys (4, 5) are mounted by means of roller bearings (13, 14) and axial bearings (15, 16) on the shaf t (7) or on the inner cone pulley (4) respectively.

4. Gearbox according to Claim 3, **characterized in that** the axial bearings (15, 16) are disposed between face sides of continuations (17, 18) on the outer cone pulleys (4, 5) and shaft collars (19, 20) on the shaft (7) and on the cone pulley continuation (22).

5. Gearbox according to Claim 4, **characterized in that** the axial bearing (16) is supported against a ring (21), which is disposed on the continuation (22) of the inner cone pulley (3) such that it can be axially pressurized by a resetting element (23), e.g. a spring or a piston-cylinder arrangement.

6. Gearbox according to one or more of Claims 1 to 5, **characterized in that** between the axial face-side end (24) of the cone pulley continuation (22) of the first cone pulley pair ( 2 , 3) and a shaft collar (26) of the shaft section (8) there is disposed a resetting means (27) for the generation of a contact pressure against the wrap-round means (6, 86).

7. Gearbox according to Claim 6, **characterized in that** the pressure means (27) is a pressure-medium-operated piston-cylinder arrangement (90), which generates the contact pressure in dependence upon the gear ratio and/or the input torque, or a spring (27).

8. Gearbox according to one or more of Claims 1 to 7, **characterized in that** the continuations (17, 18) of the outer cone pulleys (4, 5) have an outer toothing (28, 29) on their outer circumference.

9. Gearbox according to one or more of Claims 1 to 8, **characterized in that** the wrap-round means (6, 86) comprises a rigid ring.

10. Gearbox according to Claim 9, **characterized in that** the cone pulleys (2, 3, 4, 5) and/or the wrap-round means (6, 86) has a coating (30, 83, 110) made from a friction material which is preferably aramid-reinforced or carbon-reinforced.

11. Gearbox according to Claim 9 or 10, **characterized in that** the wrap-round means (6, 86) has on its radial outer circumference (31) a recess (73) of U-shaped, V-shaped, semicircular, elliptical or rectangular cross-sectional geometry, which is suitable for the reception of an adjusting device exerting a control force upon the wrap-round means (6, 86).

12. Gearbox according to one or more of Claims 9 to 11, **characterized in that** the right-sided and left-sided face sides (32, 33) of the wrap-round means (6, 86) exhibits a roughly V-shaped cross-sectional geometry with broken tip.

13. Gearbox according to Claim 12, **characterized in that** the arms of the V form the angles α and β to the radially outward pointing surface perpendicular (95) on the shaft (8), which angles correspond to the angle of attack of the cone pulley surfaces (9, 10, 11, 12) to this surface perpendicular (95).

14. Gearbox according to one or more of Claims 9 to 13, **characterized in that** the transmission means (6) has a cross-sectional geometry with an outer contour (A, B) with at least four radii (r₁, r₂ and r₃, r₄).

15. Gearbox according to one or more Claims 9 to 14, **characterized in that** the regions of the transmission means (6) with the outer contour radii (r₁, r₂) form the f rictional faces for the inner cone pulleys (2, 3), and the regions with the outer contour radii (r₃, r₄) form the frictional faces for the outer cone pulleys (4, 5) of the wrap-around gearbox (1), the radii (r₁, r₂) each being, as frictional faces for the inner cone pulleys (2, 3), larger than the respective radii (r₃, r₄) as frictional faces for the outer cone pulleys (4, 5).

16. Gearbox according to one or more of Claims 9 to 15, **characterized in that** the outer contour of the transmission means (6) is essentially U-shaped.

17. Gearbox according to one or more of Claims 9 to 16, **characterized in that** the outer contour of the transmission means (6) has further outer contour radii (r₅, r₆) which are each formed between the respective outer contour radii (r₁, r₃, and r₂, r₄) lying on one side, as frictional faces for the inner and/or outer cone pulleys (2, 3, 4, 5).

18. Gearbox according to Claim 17, **characterized in that** the further outer contour radii (r₅, r₆) are each larger than the respective outer contour radii (r₃, r₄) which form the frictional faces for the outer cone pulleys (4, 5).

19. Gearbox according to one or more of Claims 1 to 18 having an adjusting device for the wrap-around means, **characterized by** a control member (35) which supports at least one pressure element (34, 36, 65), resting on the wrap-round means (6, 86) and which is disposed such that it is mounted fixedly on the gearbox casing and can be moved radially to the longitudinal axis of the shaft.

20. Gearbox according to Claim 19, **characterized in that** the control member is configured as an actuating rod (38), which at one end supports at least one rotatably mounted pressure roller (34, 36) and at its other end is connected to a piston-cylinder arrangement (25) fixed to the gearbox casing.

21. Gearbox according to Claim 19, **characterized in that** the control member is configured as a supporting component, having an arc-shaped section (39), for at least one rotatably mounted pressure roller (41, 42), the one free end (43) of which supporting component is acted upon by an actuating device (25), whilst the other end (44) is mounted such that, though fixed to the casing, it can still be rotated.

22. Gearbox according to Claim 12, **characterized in that** the control member is configured as a control lever (45), which is mounted with one end (46) such that, though fixed to the casing, it can still be rotated, on its side (47) pointing towards the cone pulleys (2, 3; 4, 5) supports at least one pressure element (71, 72) and on its side pointing away from the cone pulleys is adjustably held by an actuating device (51).

23. Gearbox according to Claims 19 to 22, **characterized in that** the pressure elements are configured as slide blocks.

24. Drive arrangement for a vehicle, having a drive motor (96) and a wrap-round gearbox (1) according to at least one of Claims 1 to 23, **characterized in that** the outer toothing (28, 29) of the continuations (17, 18) of the outer cone pulleys (4, 5) of the wrap-round gearbox (1) respectively drive a right-sided and left-sided chain (52), which mesh with drive toothings (59, 60) on a gear shaft (58).

25. Drive arrangement according to Claim 24, **characterized in that** the outer toothing (28, 29) of at least of one of the outer cone pulleys (4, 5) meshes by means of at least one gearwheel (94) with the outer toothing (59, 60) of the gear shaft (58).

26. Drive arrangement according to one of Claims 24 or 25, **characterized in that** the drive torque is introduced by means of the outer cone pulleys (4, 5) into the gearbox and is diverted by means of the inner cone pulleys (2, 3) out of the gearbox.

## Revendications

1. Transmission à courroie à variation continue comprenant deux paires de poulies coniques et comprenant un moyen de courroie disposé entre les paires de poulies coniques, la première paire de poulies coniques (2, 3) étant entraînée par un arbre d'entraînement (7, 8) et la deuxième paire de poulies coniques (4, 5) entraînant un arbre de sortie (58), les paires de poulies coniques (2, 3 ; 4, 5) étant disposées coaxialement l'une à l'autre sur l'arbre d'entraînement (7, 8) ou sur l'arbre de sortie (58), la première paire de poulies coniques (2, 3), considérée par rapport à la deuxième paire de poulies coniques (4 ,5) étant disposée à l'intérieur et la deuxième paire de poulies coniques (4, 5), considérée par rapport à la première paire de poulies coniques (2, 3) étant disposée à l'extérieur, la deuxième paire de poulies coniques (4, 5) entourant radialement la première paire de poulies coniques (2, 3), **caractérisée en ce que** l'une des poulies coniques (5) de la deuxième paire de poulies coniques (4, 5) est disposée à rotation et fixe axialement sur l'arbre (7, 58) portant les paires de poulies coniques et l'autre poulie conique (4) est disposée à rotation et déplaçable axialement dans la région d'une portion (8) de diamètre réduit de l'arbre (7, 58), et **en ce que** l'autre poulie conique rotative (4) de la deuxième paire de poulies coniques (4, 5) est montée à rotation sur une saillie axiale (22) d'une poulie conique (3) de la première paire de poulies coniques (2, 3) reposant de manière déplaçable axialement sur la portion d'arbre (8).

2. Transmission selon la revendication 1, **caractérisée en ce que** la paire de poulies coniques interne (2, 3) présente des faces coniques (9, 10) ouvertes radialement vers l'extérieur, et **en ce que** la paire de poulies coniques externe (4 ,5) dispose de faces coniques (11 ,12) ouvertes radialement vers l'intérieur.

3. Transmission selon l'une quelconque des revendications 1 ou 2, **caractérisée en ce que** la poulie conique interne (3) est montée à coulissement sur la portion (8) de l'arbre (7) de diamètre réduit, et **en ce que** les poulies coniques externes (4 ,5) sont montées sur des paliers à roulement (13, 14) et des paliers axiaux (15, 16) sur l'arbre (7) ou sur la poulie conique interne (4) .

4. Transmission selon la revendication 3, **caractérisée en ce que** les paliers axiaux (15, 16) sont disposés entre des côtés frontaux de saillies (17, 18) sur les poulies coniques externes (4, 5) et des épaulements d'arbre (19, 20) sur l'arbre (7) et sur la saillie (22) d'une poulie conique.

5. Transmission selon la revendication 4, **caractérisée en ce que** le palier axial (16) s'appuie sur une bague (21) qui est disposée sur la saillie (22) de la poulie conique interne (3) de manière à pouvoir être sollicitée axialement par un élément de rappel (23), par exemple un ressort ou un agencement cylindre-piston.

6. Transmission selon l'une quelconque ou plusieurs des revendications 1 à 5, **caractérisée en ce qu'**un moyen de rappel (27) pour produire une force de pression contre le moyen de courroie (6, 86) est disposé entre l'extrémité axiale du côté frontal (24) de la saillie (22) de poulie conique de la première paire de poulies coniques (2, 3) et un épaulement d'arbre (26) de la portion d'arbre (8).

7. Transmission selon la revendication 6, **caractérisée en ce que** le moyen de pression (27) est un ressort (27) ou un agencement cylindre-piston (90) actionnable par un fluide sous pression produisant une force de pression en fonction du rapport de transmission et/ou du couple d'entrée.

8. Transmission selon l'une quelconque ou plusieurs des revendications 1 à 7, **caractérisée en ce que** les saillies (17, 18) des poulies coniques externes (4, 5) présentent sur leur périphérie extérieure une denture externe (28, 29).

9. Transmission selon l'une quelconque ou plusieurs des revendications 1 à 8, **caractérisée en ce que** le moyen de courroie (6, 86) se compose d'un anneau rigide en flexion.

10. Transmission selon la revendication 9, **caractérisée en ce que** les poulies coniques (2, 3, 4, 5) et/ou le moyen de courroie (6, 86) présentent un revêtement (30, 83, 110) en un matériau de friction qui est de préférence renforcé par des fibres d'aramide ou de carbone.

11. Transmission selon la revendication 9 ou 10,
**caractérisée en ce que** le moyen de courroie (6, 86) présente, sur sa périphérie radiale extérieure (31) un évidement (73) avec une géométrie en section transversale en forme de U, en forme de V, en forme de demi-cercle, elliptique ou de forme rectangulaire, qui est appropriée pour recevoir un dispositif de réglage exerçant une force de réglage sur le moyen de courroie (6, 86).

12. Transmission selon l'une quelconque ou plusieurs des revendications 9 à 11, **caractérisée en ce que** les côtés frontaux droit et gauche (32, 33) du moyen de courroie (6, 86) présentent une géométrie en section transversale approximativement en forme de V avec une pointe cassée.

13. Transmission selon la revendication 12, **caractérisée en ce que** les branches du V forment par rapport à la surface normale (95) à l'arbre (8), tournée radialement vers l'extérieur, les angles α, β, qui correspondent à l'angle d'attaque des faces des poulies coniques (9, 10, 11, 12) par rapport à cette surface normale (95).

14. Transmission selon l'une quelconque ou plusieurs des revendications 9 à 13, **caractérisée en ce qu'**un moyen de transmission (6) présente une géométrie en section transversale avec un contour extérieur (A, B) ayant au moins quatre rayons (r₁, r₂ et r₃, r₄).

15. Transmission selon l'une quelconque ou plusieurs des revendications 9 à 14, **caractérisée en ce que** les régions du moyen de transmission (6) avec les rayons du contour extérieur (r₁, r₂) forment les surfaces de friction pour les poulies coniques internes (2, 3) et les régions avec les rayons du contour extérieur (r₃, r₄) forment les surfaces de friction pour les poulie coniques externes (4, 5) de la transmission à courroie (1) , les rayons (r₁, r₂) en tant que surfaces de friction pour les poulies coniques internes (2, 3) étant à chaque fois plus grands que les rayons respectifs (r₃, r₄) en tant que surfaces de friction pour les poulies coniques externes (4, 5).

16. Transmission selon l'une quelconque ou plusieurs des revendications 9 à 15 **caractérisée en ce que** le contour extérieur du moyen de transmission (6) est essentiellement en forme de U.

17. Transmission selon l'une quelconque ou plusieurs des revendications 9 à 16 **caractérisée en ce que** le contour extérieur du moyen de transmission (6) présente d'autres rayons de contour extérieur (r₅, r₆), qui sont à chaque fois réalisés entre les rayons de contour extérieur respectifs (r₁, r₃ et r₂, r₄) se trouvant d'un côté en tant que surface de friction pour les poulies coniques internes, respectivement externes (2, 3, 4, 5).

18. Transmission selon la revendication 17, **caractérisée en ce que** les autres rayons de contour extérieur (r₅, r₆) sont à chaque fois plus grands que les rayons de contour extérieur respectifs (r₃, r₄) qui forment les surfaces de friction pour les poulies coniques externes (4, 5).

19. Transmission selon l'une quelconque ou plusieurs des revendications 1 à 18, avec un dispositif de réglage pour le moyen de courroie, **caractérisé par** un organe de réglage (35) portant au moins un élément de pression (34, 36, 65) reposant sur le moyen de courroie (6, 86), lequel est monté fixement par rapport au carter de la transmission et est disposé mobile radialement par rapport à l'axe longitudinal de l'arbre.

20. Transmission selon la revendication 19, **caractérisée en ce que** l'organe de réglage est réalisé en tant que tige d'actionnement (38) qui porte à une extrémité au moins un galet de pression (34, 36) monté rotatif et qui est connectée à son autre extrémité à un agencement cylindre-piston (25) fixe par rapport au carter de la transmission.

21. Transmission selon la revendication 19, **caractérisée en ce que** l'organe de réglage est réalisé en tant que composant de support présentant une portion (39) en forme d'arc de cercle, pour au moins un galet de pression (41, 42) monté rotatif, sur l'extrémité libre (43) duquel vient en prise un dispositif d'actionnement (25) tandis que l'autre extrémité (44) est montée fixe par rapport au carter mais rotative.

22. Transmission selon la revendication 12, **caractérisée en ce que** l'organe de réglage est réalisé sous forme de levier de réglage (45) qui est monté avec une extrémité (46) fixe par rapport au carter mais rotatif, porte au niveau de son côté (47) tourné vers les poulies coniques (2, 3 ; 4, 5) au moins un élément de pression (71, 72), et est maintenu de manière déplaçable au niveau de son côté opposé aux poulies coniques par un dispositif d'actionnement (51).

23. Transmission selon les revendications 19 à 22, **caractérisée en ce que** les éléments de pression sont réalisés sous forme de patins.

24. Agencement d'entraînement pour un véhicule, comprenant un moteur d'entraînement (96) et une transmission à courroie (1) selon au moins l'une quelconque des revendications 1 à 23, **caractérisé en ce que** la denture externe (28, 29) des saillies (17, 18) des poulies coniques externes (4 ,5) de la transmission à courroie (1) entraîne à chaque fois une chaîne (52) du côté droit et du côté gauche, lesquelles sont en prise avec les dentures d'entraînement (59, 60) sur un arbre de transmission (58).

25. Agencement d'entraînement selon la revendication 24, **caractérisé en ce que** la denture externe (28, 29) d'au moins l'une des poulies coniques externes (4, 5) est en engagement par engrènement de dents par le biais d'au moins une roue dentée (94) avec la denture externe (59, 60) de l'arbre de transmission (58).

26. Agencement d'entraînement selon l'une quelconque des revendications 24 ou 25, **caractérisé en ce que** le couple d'entraînement est introduit dans la transmission par le biais des poulies coniques externes (4, 5) et est extrait de la transmission par le biais des poulies coniques internes (2, 3).
